# EUROPEAN PATENT APPLICATION

(11) **EP 2 330 280 A1**
(43) Date of publication of application: **08.06.2011**
(21) Application number: 09177647.6
(22) Date of filing: 01.12.2009
(51) Int. Cl.: F02C 7/143, F02C 1/05, F25J 1/02

(54) **Method of operating a gas turbine; a gas turbine system; and a method and system for cooling a hydrocarbon stream**

(71) Applicant: Shell Internationale Research Maatschappij B.V., 2596 HR The Hague (NL)
(72) Inventor: Domnick, Andreas Joachim, 1031 HW Amsterdam (NL); Di Nola, Gianluca, 1031 HW Amsterdam (NL); Straver, Alexander Emanuel Maria, 2596 HR The Hague (NL); Groothuis, Casper Krijno, 2596 HR The Hague (NL); Tanaeva, Irina, 2596 HR The Hague (NL)

(57) **Abstract**

A fuel stream is fed to a gas turbine. An oxygen-containing stream is chilled to provide a chilled oxydizing stream, which is also fed to the gas turbine. The fuel stream is combusted in the gas turbine with the chilled oxydizing stream. Chilling duty is provided by converting solar power into chilling duty. At least part of the chilling duty is applied for the chilling of the oxygen-containing stream. The gas turbine may be comprised in a gas turbine system. The gas turbine system may form part of a system for cooling a gaseous hydrocarbon stream. The gas turbine may be operated as part of a method of cooling a hydrocarbon stream.

## Description

In one aspect, the present invention relates to a method of operating a gas turbine. In another aspect, the present invention relates to a gas turbine system. In another aspect, the present invention relates to a method of cooling a gaseous hydrocarbon stream comprising operating a gas turbine. In still another aspect, the present invention relates to a system for cooling a gaseous hydrocarbon stream, comprising a gas turbine and an apparatus for operating the gas turbine.

Gas turbines are commonly applied in the industry to generate mechanical power and/or electric power. A common example wherein a gas turbine is used to generate mechanical power is a gas turbine driving an external compressor, such as a refrigerant compressor for compressing a refrigerant in a cooling process. In the present description, the term "external compressor" is used to describe for instance a refrigerant compressors driven by a gas turbine, in order to distinguish it from the "internal" compressor(s) that form part of the gas turbine itself and/or the operation thereof. A notable example of such "internal" compressor is an air compressor used to compress oxydizing air prior to injecting it into the gas turbine's combustion chamber.

A well-known drawback of gas turbines is that their power output decreases with increasing ambient air temperature. A publication entitled "Concentrated solar thermal power - NOW !", dated September 2005 which Applicant found at <<http://www.greenpeace.org/raw/ content/international/press/reports/Concentrated-Solar-Thermal-Power.pdf», describes a so-called integrated solar combined cycle system (ISCC), that uses a concentrated solar power element as a solar boiler to supplement waste heat from a gas turbine in order to augment power generation in a steam rankine bottoming cycle. Applicant considers that the ISCC benefits most from the additional power generation if the sun is active, which often coincides with conditions of high ambient temperature under which the gas turbine delivers less power.

A drawback of the ISCC as described in publication referenced above is that it requires integration of two steam systems in order to provide a single steam stream to the Rankine bottoming cycle.

The present invention provides a method of operating a gas turbine, comprising:
- feeding a fuel stream to a gas turbine;
- chilling an oxygen-containing stream to provide a chilled oxydizing stream;
- feeding the chilled oxydizing stream to the gas turbine;
- combusting the fuel stream in the gas turbine with the chilled oxydizing stream;
- converting solar power into chilling duty;
- applying at least part of the chilling duty for said chilling of said oxygen-containing stream.

In another aspect, the present invention provides a method of cooling a gaseous hydrocarbon stream, comprising:
- driving an external compressor using power generated by a gas turbine;
- compressing a medium with the external compressor thereby providing a compressed medium;
- extracting heat from the compressed medium;
- after said extracting of heat from the compressed medium, expanding the compressed medium thereby providing cooling duty;
- cooling the gaseous hydrocarbon stream using at least part of said cooling duty,
wherein operating the gas turbine in accordance with the method of operating a gas turbine as defined above.

Furthermore, in still another aspect the present invention provides a gas turbine system, comprising:
- a gas turbine comprising a combustion chamber;
- a fuel feed system for supplying a fuel to the combustion chamber;
- an oxygen supply system for supplying oxygen-containing stream to the combustion chamber, the oxygen supply system comprising a chilling unit for chilling the oxygen-containing stream upstream of the combustion chamber;
- a solar power convertor arranged to convert solar power into chilling duty and to provide said chilling duty to the chilling unit.

In yet another aspect, the present invention provides a system for cooling a gaseous hydrocarbon stream, comprising:
- an external compressor functionally coupled to a gas turbine to be driven with power generated by the gas turbine;
- a medium communicating with the external compressor to be compressed in the compressor to provide a compressed medium;
- a cooler arranged downstream of the external compressor to extract heat from the compressed medium;
- an expander arranged downstream of the cooler to expand the compressed medium thereby providing cooling duty;
- means for extracting heat from the gaseous hydrocarbon stream using at least part of said cooling duty, wherein the gas turbine is comprised in a gas turbine system as defined above.

The invention will now be further illustrated by way of example and with reference to one or more figures in the accompanying drawing, wherein
Fig. 1 schematically shows a gas turbine system employing solar powered chilling of an oxydizing stream;
Fig. 2 schematically shows a more detailed embodiment of a gas turbine system employing solar-powered electric-driven mechanical chilling of an oxydizing stream;
Fig. 3 schematically shows a more detailed alternative embodiment for solar-powered electric-driven mechanical chilling;
Fig. 4 schematically shows a more detailed embodiment of a gas turbine system employing solar-powered steam-driven mechanical chilling of an oxydizing stream;
Fig. 5 schematically shows a more detailed embodiment of a gas turbine system employing solar-powered thermally-driven chilling of an oxydizing stream;
Fig. 6 schematically shows a group of embodiments employing storage of chilling duty;
Fig. 7 system and method for cooling and liquefying a gaseous hydrocarbon stream; and
Fig. 8 schematically shows a group of embodiments of a gas turbine system that employs solar power for intercooling of the oxidizing stream.

In the description of these figures hereinbelow, a single reference number has been assigned to a line as well as a stream carried in that line. These terms can be used interchangeably. The same reference numbers refer to similar components, streams or lines.

It is presently proposed to use solar powered chilling of an oxydizing stream before feeding it to a gas turbine, more specifically to a combustion chamber of a gas turbine, to be used for combusting a fuel stream in the gas turbine. By chilling the oxydizing stream before feeding it to a gas turbine the density of the oxydizing stream is increased thereby relieving the gas turbine compressor from some of its duty. This helps to maintain power output of the gas turbine even with increasing ambient temperature. This way the total generated power with the gas turbine can be maintained, or at least the amount of decline of power can be reduced, without requiring to integrate solar generated power with another power source.

Preferably, the chilling duty is generated from solar power only.

Selecting the use of solar power specifically for chilling of the oxydizing stream has as advantage that it can be applied as a unit that operates more or less independently from any power released by the gas turbine itself and independently from any process or equipment that uses power released by the gas turbine. Moreover, it is usually possible to keep operating the gas turbine when there is no or not enough sunshine. Hence, no back-up power provision for powering additional chilling of the oxygen containing stream needs to be in place. By omitting a back-up power provision, at least part of the expense of a solar power convertor is accounted for and an increase of complexity of operation is avoided as well.

Generally, a solar receiver is involved in order to receive power emitted from the sun and transform it into a transportable form of power such as electricity or a heated fluid stream, for instance steam. In order to have the maximum peak shaving effect in avoiding gas turbine power loss due to conditions of high ambient temperature, the solar receiver is preferably located in the vicinity of the gas turbine. This way the solar receiver may operate under the same meteorological and day time conditions as the gas turbine. For the purpose of the present description, the solar receiver is located in the vicinity of the gas turbine is understood to include a location within a radius of 10 km from the gas turbine.

The amount of chilling duty one needs depends on various facts and design parameters, including the type and power of the gas turbine (which determines for instance the amount of inlet air per time unit that needs to be chilled), as well as on typical temperature variations expected where the gas turbine is to be used, as well as how much decrease in gas turbine shaft power can be tolerated. The skilled person is expected to be able to calculate the precise requirement for a specific application.

However, as a target range for typical industrial frame gas turbines when used in a desert climate, it is suggested that between 2 and 6 MW chilling power (e.g. in the form of drive power in a mechanical chiller) per 40 MW of nominal gas turbine shaft power is available. With 6 MW the temperature of the chilled oxydizing stream can be brought back to 10 °C even on the hottest days. More generally, between about 5 and 15% of the gas turbine power is a suggested amount of power for inlet air chilling for industrial frame gas turbines. One can suffice with less chilling power for typical aeroderivative gas turbines of comparable shaft power, because they typically require a lower air flow.

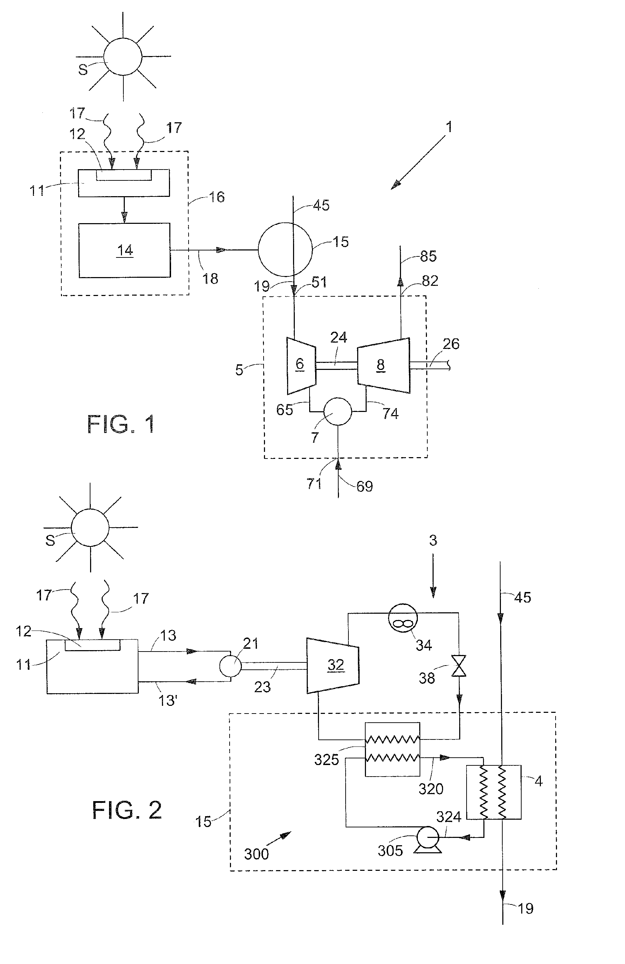

Fig. 1 schematically illustrates a gas turbine system 1 employing solar powered chilling of an oxydizing stream 45. The gas turbine system 1 is provided with a gas turbine 5, which has a combustion chamber 7 and a fuel feed system for supplying a fuel 69 to the combustion chamber 7 via fuel inlet 71 into the gas turbine 5. Furthermore, there is an oxygen supply system for supplying an oxygen-containing stream 45, suitably in the form of an air stream, to the combustion chamber 7. A suitable source of the air stream is the ambient atmosphere. The oxygen supply system is provided with a chilling unit 15 for chilling the oxygen-containing stream 45 upstream of the combustion chamber 7. The chilling unit 15 is connected to a solar power convertor 16, to provide the chilling duty 18 to chill the oxygen-containing stream 45. The solar power convertor 16 is arranged to convert solar power 17 into chilling duty 18.

The solar power convertor 16 suitably comprises a receiver 12 arranged to capture the solar power 17 emitted by the sun S, and a cold generator 14 connected to the receiver 12. The cold generator 14 provides the chilling duty 18. The receiver 12 is usually integrated with or forms part of a solar power system 11, which contains equipment to transform the captured solar power into a transportable form of power such as electricity or a heated fluid stream. The transportable form of power can be fed to the cold generator 14. Various detailed embodiments for the solar power convertor will be disclosed later herein.

The cold generator 14 may be located anywhere, e.g. close to the solar receiver 12 or close to the chilling unit 15, or not close to any of the two. The transportable form of power can be transported over the distance between the solar receiver and the cold generator, but it is also feasible to transport the cold in line 18 generated by the cold generator over an appreciable distance such as over 10 km or so. This could be achieved for instance by transferring cold water through a pipeline.

Line 45 carrying the oxygen-containing stream 45 communicates with line 19 via the chilling unit 15. Line 19 is fluidly connected to an oxygen inlet 51 into the gas turbine 5. Thus the chilling unit 15 is connected to the gas turbine 5 via line 19.

Although the internal construction of a gas turbine is well known the person skilled in the art, to further aide the understanding of the invention Figure 1 shows the gas turbine compressor 6 (compression stage 6) of which a suction inlet is connected to the oxygen inlet 51 arranged to receive the chilled oxydizing stream 19. The gas turbine compressor discharge line 65 is connected to the combustion chamber 7. The combustion chamber 7 is, via line 74, also connected to an expansion stage in the form of an expansion turbine 8. The discharge opening of the expansion turbine 8 is connected to exhaust line 85 via exhaust outlet 82 of the gas turbine 5. A water heat recovery unit (not shown) may be positioned in exhaust line 85 or integrated with exhaust outlet 82, for instance to generate steam using heat from the expanded exhaust fumes that are discharged from the expansion stage 8.

The gas turbine compressor 6 is mechanically connected to the expansion turbine 8 via first mechanical drive shaft 24 that is internal to the gas turbine 5, in a driving arrangement whereby rotation of the expansion turbine 8 drives rotation of the gas turbine compressor 6. An external drive shaft 26 is also connected to the expansion turbine 8, either in a direct or indirect fashion. The external drive shaft 26 may be coupled to external rotating equipment, suitable an electric generator or an external compressor.

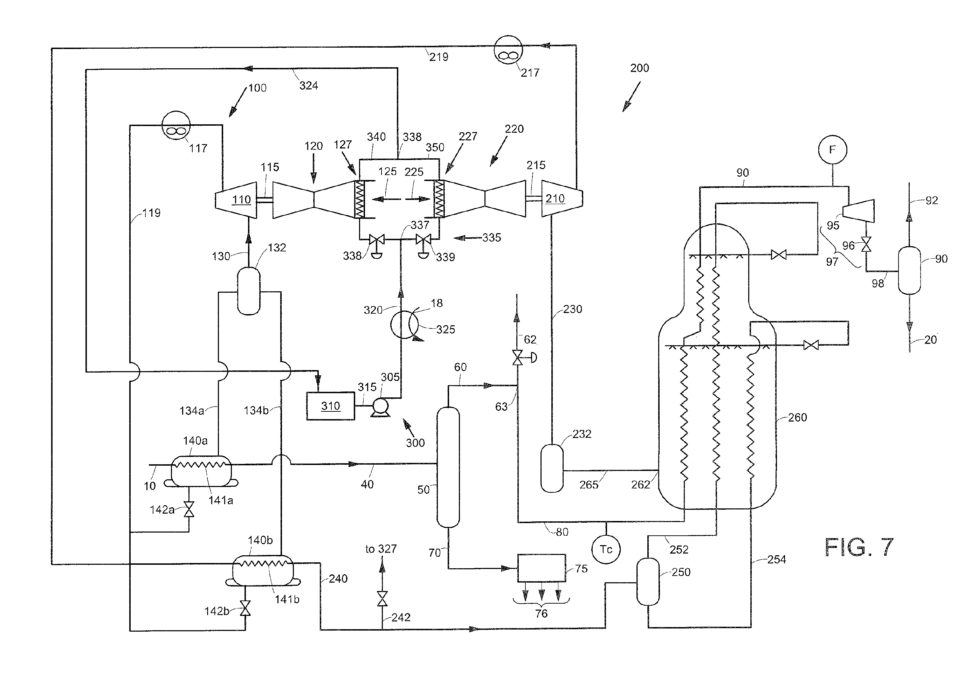

The gas turbine 5 (including first and second gas turbines 120, 220 to be discussed in more detail with reference to Figure 7) may be of an aeroderivative type, such as for example a Rolls Royce Trent 60 and General Electric LMS100™, LM6000, LM5000 and LM2500 or equivalents thereof from different manufacturers. The presently proposed oxygen-containing inlet stream chilling (such as inlet air chilling) is particularly advantageous when using aeroderivative type turbines, as this can replace the need for helper drivers (typically a steam turbine or electric motor) to compensate for power loss. Alternatively, the gas turbines may be of a heavy industrial frame type, such as for example a General Electric Frame-5, Frame-6, Frame-7 or Frame-9 (or equivalents thereof from different manufacturers) to enhance the efficiency, although in this case an additional driver may still need to be provided for starting up the turbine.

During operation, fuel stream 69 is fed to the gas turbine 5 via fuel inlet 71. The oxygen-containing stream 45, after drawing from the source of the oxygen-containing stream, is chilled in chilling unit 15. The thus provided chilled oxydizing stream 19, obtained by chilling the oxygen-containing stream 45, is discharged from the chilling unit 15 in the form of chilled oxydizing stream 19 in line 19. The chilled oxydizing stream 19 is fed to the gas turbine 5 via oxygen inlet 51. The fuel stream 69 is combusted with the chilled oxydizing stream 19 in the in the gas turbine 5, suitably in the combustion chamber 7.

Suitably the oxygen-containing stream 45 is an air stream drawn from the ambient atmosphere.

In the context of the present description, chilling is understood to mean removing heat from the oxygen-containing stream drawn from the source of the oxygen-containing stream, thereby lowering the temperature to below the ambient temperature. Preferably the temperature is lowered to a temperature of lower than at least 5 °C below the ambient temperature. Ambient temperature is the temperature of the source of the oxygen-containing stream 45, at the location where the oxygen-containing stream is taken into the oxygen-containing stream feed line 45. For the purpose of this specification, ambient temperature may be in the range of from 5 °C to 60 °C, preferably of from 10 °C to 60 °C.

It is preferred that the chilled oxydizing stream 19 leaving the chilling unit 15 has a temperature of below 30 °C, more preferably below 25 °C, even more preferably below 20 °C. It is also preferred that the oxygen-containing stream 45 is not cooled below the freezing temperature of water, in order to avoid the freezing of any water vapour or liquid in the oxygen-containing stream. For example, it is preferred that the temperature of the chilled oxydizing stream 19 is not below 5 °C when the chilling unit is in operation. A suitable target temperature for the chilled oxydizing stream 19, in particular when air is used, is 10 °C.

Solar power 17 is converted into chilling duty 18. At least part of the chilling duty 18 is used for the chilling of the oxygen-containing stream 45 in the chilling unit 15, thereby producing the chilled oxydizing stream 19.

There are various methods and systems known in the art to convert solar power into chilling duty. In the broadest sense the proposed invention is not limited to any single one of them, but certain groups of embodiments will be illustrated with reference to Figures 2 to 5.

One group of embodiments, illustrated with reference to Figures 2 to 4, employs mechanical chilling to convert solar power into chilling duty. Mechanical chilling may involve a chilling refrigerant that is circulated in a chilling refrigerant circuit 3 by means of a chilling cycle compressor 32. In this group of embodiments, solar power convertor may thus comprise a chilling cycle compressor 32 powered using electrical power and/or mechanical power generated from the solar power 17, wherein said solar power convertor comprises a chilling refrigerant coupled to the chilling cycle compressor 32 to be compressed by the chilling cycle compressor 32.

Refrigerants that are commonly used in for instance domestic refrigerators tend to be suitable for the purpose of being used as a chilling refrigerant in the present group of embodiments. Other suitable chilling cycle refrigerants are those that can be condensed by cooling against atmosphere, such as is the case with for instance propane, butanes and butylene. Also suitable is ammonia.

Although variations are possible, downstream of the chilling cycle compressor 32 a cooler 34 may be provided to cool the chilling refrigerant by removing heat from the compressed chilling refrigerant coming from the chilling cycle compressor 32. This preferably leads to condensation of the chilling refrigerant. The heat is preferably removed by indirect heat exchange against ambient. The cooler 34 may thus be provided in the form of an ambient heat exchanger, for instance an air cooler or a water cooler. An expansion device 38, suitably in the form of a dynamic expander or a Joule Thompson valve, is provided, for instance downstream of the cooler 34. The chilling refrigerant from the cooler 34 may be expanded. The thus expanded chilling refrigerant contains the chilling duty that can be provided to the chilling unit 15 and used to chill the oxygen-containing stream 45.

The chilling cycle compressor 32, the cooler 34 and the expansion device 38 may form part of the cold generator 14 as depicted in Figure 1.

The chilling cycle compressor 32 is powered by electrical and/or mechanical power generated from solar power 17. In the embodiment of Figure 2, for example, the chilling cycle compressor 32 is driven by mechanical power delivered by an electromotor 21, which is powered by electric power (13, 13) from the solar power system 11. The mechanical power may be imparted to the chilling cycle compressor 32 via chilling cycle compressor drive shaft 23.

In order to generate electric power, the solar power system 11 may comprise receivers 12 in the form of photovoltaic elements, which directly produce the electric power. Alternatively, as illustrated in

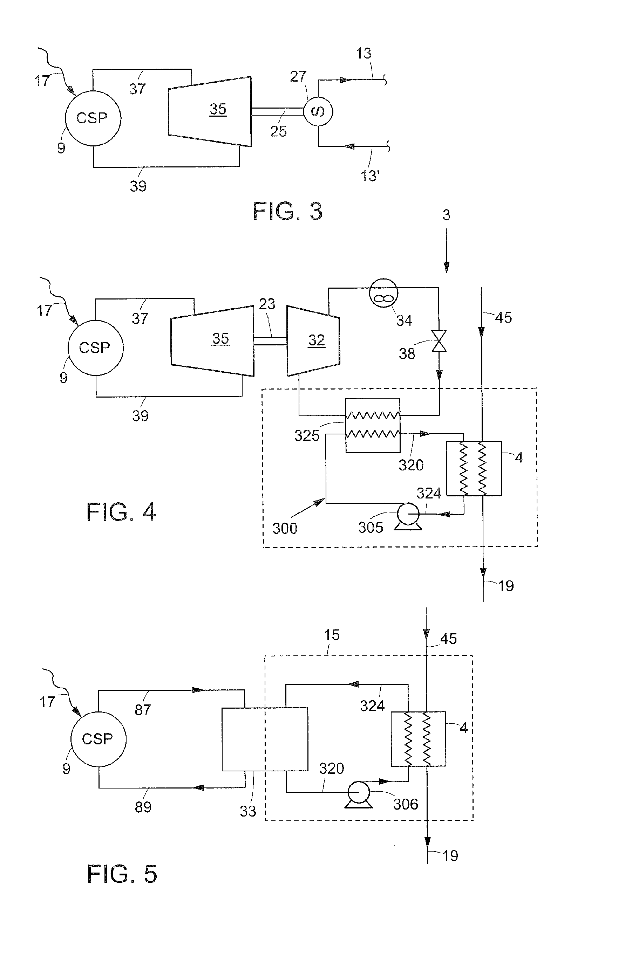

Figure 3, the electric power 13 may be generated via an intermediate form of power. For instance, the intermediate form of power may be provided in the form of an expansion fluid stream 37, suitably in the form of a heated steam stream, which can be expanded in an expansion turbine 35. The expansion turbine 35 may drive an electric generator 27. Figure 3 shows a generator drive shaft 25 that connects the expansion turbine 35 with the electric generator 27, to impart rotary motion from the expansion turbine 35 to the electric generator 27.

The heated expansion fluid stream 37 may be generated by heating a stream 39 (suitably by re-heating a return stream) comprising the expansion fluid stream discharged from the expansion turbine 35, using heat captured from the solar power 19. Suitably this may be done using a concentrated solar power (CSP) system 9. The basics of such a CSP system will be briefly described later herein.

Again referring to Figure 2, the oxygen-containing stream 45 could be heat exchanged against the chilling cycle refrigerant in order to chill the oxygen-containing stream 45 and prepare the chilled oxydizing stream 19. However, it may be preferred to transfer the cooling duty from the chilling cycle refrigerant to the oxygen-containing stream 45 via a coolant fluid. This allows for optimum selection of a chilling cycle refrigerant, including flammable ones. In the embodiment of Figure 2, the chilling unit 15 is for this reason provided with a chiller heat exchanger 325, wherein the chilling cycle refrigerant is brought into indirect heat exchange contact with the coolant fluid. The coolant fluid is cycled in a coolant circuit 300, with the aid of optional pump 305. This pump may be anywhere in the coolant circuit 300.

The chiller heat exchanger 325 thus discharges a chilled coolant stream 320 and a warmed, preferably evaporated, chilling refrigerant stream. The warmed, preferably evaporated chilling refrigerant stream is led back to the chilling cycle compressor 32 at a suction inlet thereof. The chilled coolant 320, on the other hand, may be passed to heat exchanger 4 where it is brought into indirect heat exchange contact with the oxygen containing stream 45.

For the purpose of the present specification, "chilled coolant" is understood to be a fluid that has a temperature lower than that of the ambient air temperature. Suitable coolants include water and brine, possibly admixed with an anti-freezant such as a glycol and/or a corrosion inhibitor.

Instead of employing an electric motor to drive the chilling refrigerant compressor 32, Figure 4 illustrates a group of embodiments wherein a heated expansion fluid stream 37, generated using heat captured from the solar power 19, is expanded in an expansion turbine 35 to provide mechanical power. The mechanical power is used to directly drive the chilling cycle compressor 32. The chilling cycle compressor chilling cycle compressor drive shaft 23 may therefore be coupled to the expansion turbine 35. The embodiment of Figure 4 is shown with the optional coolant circuit 300 as explained above with reference to Figure 2, but at the discretion of the skilled person the oxygen-containing stream 45 may be heat exchanged against the chilling cycle refrigerant without the use of the intermediate coolant fluid.

Another group of embodiments, illustrated with reference to Figure 5, comprises a thermally driven chiller 33. The converting of solar power into chilling duty with a thermally driven chiller comprises adding heat obtained from solar power 17 to the thermally driven chiller 33. The thermally driven chiller 33 generates a chilled coolant stream 320, which may be pumped by an optional pump unit 305 to a heat exchanger 4. The heat exchanger 4 is also in fluid communication with lines 45 and 19 to receive the oxygen-containing stream 45 and to discharge the chilled oxydizing stream 19, while the oxygen-containing stream releases heat to the chilled coolant 320.

Thermally driven chillers are known in the art. A relatively common example is formed by the group consisting of absorption chillers. Another example is formed by the group consisting of adsorption chillers. Still another example is formed by the group consisting of absorption heat pumps. Their principle of operation is similar to absorption chillers.

Absorption chilling of the coolant fluid is based on evaporation, thereby carrying heat drawn from the coolant fluid in the form of faster-moving (hotter) molecules, from a first absorption chilling material to another absorption chilling material that preferentially absorbs the hot molecules. Evaporation typically takes place in an evaporator, for instance comprising a coil, which may receive a return stream 324 of the coolant fluid downstream of heat exchanger 4. Said return stream 324 is then brought into indirect heat exchange contact with the first absorption chilling material, where it passes heat to the first absorption chilling material and thereby is transformed into the chilled coolant stream 320.

One example of an absorption refrigerator sends liquid ammonia into a hydrogen gas. The liquid ammonia evaporates in the presence of hydrogen gas, providing the cooling. The now gaseous ammonia is sent into a container holding water, which absorbs the ammonia. The water-ammonia solution is then directed past a heater, which boils ammonia gas out of the water-ammonia solution. The ammonia gas is then condensed into a liquid. The liquid ammonia is then sent back through the hydrogen gas, completing the cycle.

More common in large commercial plants are so-called lithium bromide absorption chillers. A lithium bromide absorption chiller uses a solution of lithium bromide salt and water. Water under low pressure is evaporated from the evaporator coils with the coolant fluid that is being chilled. The water is absorbed by a lithium bromide/water solution. The water is driven off the lithium bromide solution using heat.

Heat for the heater in the thermally driven chilling process may be provided by capturing solar energy 17 from the sun, for instance by means of a CSP unit 9, and heating a heat transfer fluid 89 using the captured solar energy. The heated heat transfer fluid 87 is passed to the thermally driven chiller 33. This way, the thermally driven chiller 33 may receive heat from the solar power 17.

The heat transfer fluid stream 89 may be any suitable heat transfer fluid stream, including one or more selected from the group consisting of: water, liquid sodium, molten salt, natural oil, synthetic oil and air. In the case of water, the heated heat transfer fluid 87 may take the form of steam.

As an example, Applicant has calculated the effect of high ambient temperature in a middle eastern desert climate on the power output of GE Frame 6 gas turbine by simulation. For instance, the gas turbine gross power output was simulated to be 42.2 MW when the oxydizing air stream is 10 °C, and it drops by approximately 8.5 MW to 33.7 MW when the oxydizing air stream is 43°C. In order to bring the oxydizing air stream temperature back to 10 °C by chilling, a power of about 4.1 MW is required.

For an LM6000 aeroderivative gas turbine, with the same temperature increase from 10 to 43 °C, the gross power output drops from about 44 MW to about 28 MW. This is a larger drop than for the Frame 6, but the power output drop can be avoided using less chilling power (approximately 3.6 MW) because the air flow rate may be some ~10 % lower than that of an industrial type gas turbine of comparable power.

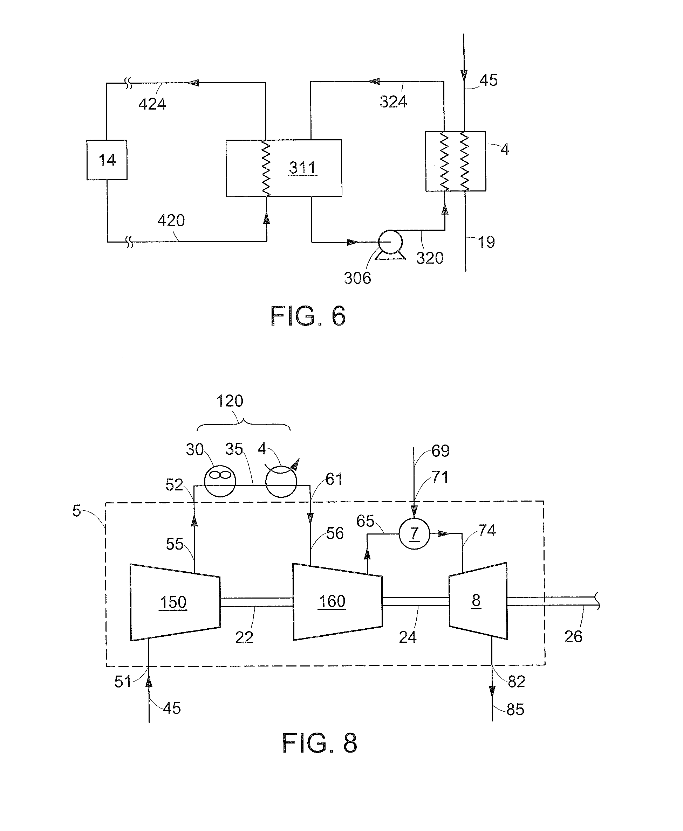

Figure 6 illustrates a group of embodiments, wherein the chilling unit 15 comprises a chilled coolant storage tank 311. This way, the coolant fluid can be stored after having been chilled. The chilled coolant fluid 320 can then be retrieved from the chilled coolant storage tank and provided to the heat exchanger 4 even at times when the sun is not providing sufficient power to chill the coolant or to chill enough of the coolant. The amount of chilling duty provided can be varied by modulating the flow rate of the chilled coolant fluid 320 retrieved from the chilled coolant storage tank and provided to the heat exchanger 4.

There are many variations within this group of embodiments. For instance, an auxiliary coolant fluid 420 may be provided in chilled form from the cold generator 14 (see Fig. 1). Cold duty may be passed from the auxiliary coolant fluid to the coolant present in the chilled coolant storage tank 311, e.g. via indirect heat exchange. After having absorbed some heat from the coolant fluid in the chilled cooland storage tank 311, an auxiliary return stream 424 may then be passed back to the cold generator 14. Alternatively, the auxiliary cooland fluid may be provided in the form of the chilling refrigerant from the chilling refrigerant cycle 3. In this case the cold duty may be added to the coolant present in the chilled coolant storage tank 311 via direct heat exchange.

In a more sophisticated alternative group of embodiments, chilled coolant fluid 320 may be directly passed from the cold generator to the heat exchanger 4 at times that actual cold generation capacity in the cold generator 14 is available. Any excess cold generation compared to the demand of chilling duty by the heat exchanger 4 may be used to produce excess chilled coolant fluid, which may be passed to the chilled coolant storage tank 311. On the other hand, at times when there is insufficient cold generation in the cold generator 14 to satisfy the demand for chilling duty in heat exchanger 4, chilled coolant fluid can be supplemented from the chilled coolant storage tank 311. Suitably, there is also provided a warm coolant storage tank, which can be used to temporarily store a warm return stream at times that the cold generator does not have enough power to chill the return stream.

In still another group of embodiments, typically those involving CSP, energy may be stored in the form of heat storage (not shown). A heat storage unit may be provided wherein the thermal energy from the heated expansion stream 37 or heated heat transfer fluid stream 87 may be stored. For instance, the heat may be passed to a cold salt stream from a cold salt storage tank to generate a hot salt stream. The hot salt stream is passed to a hot salt storage tank where it can be stored until the thermal energy of the hot salt is required. For example, a sixteen hour molten-salt storage system can allow CSP systems to be run on a 24 hour basis in Summertime when there is sufficient daytime sunlight.

In an alternative embodiment, the captured solar thermal energy can be stored in a subsurface geologic reservoir, as described in U.S. Patent Application Publication No. 2006/0048770. In this case, a supercritical fluid, such as brine, is generated from the captured solar thermal energy in the heat storage unit. The supercritical fluid can be injected into a subsurface geologic reservoir through at least one injection well. Once charged with supercritical fluid, the subsurface geological formation forms a synthetic geothermal reservoir. The supercritical fluid can subsequently be extracted from the subsurface geologic reservoir through at least one extraction well bore, and the captured solar thermal energy released to provide the heated steam stream 37 and/or the heated heat transfer stream 87.

Irrespective of whether the chilling is based on mechanical chilling using mechanical refrigeration (see e.g. Figs. 3 and 4), or thermally driven chilling using a thermally driven chiller (see e.g. Fig. 5), the solar power for providing the power to be converted into chilling duty can be collected using a so-called concentrated solar power (CSP). CSP systems are known in the art, but will be described briefly here as well.

A CSP system concentrates and collects direct solar energy to provide medium to high temperature heat. A CSP system may contain three main elements: one or more concentrators, one or more receivers and one or more expansion fluid circuits, suitably in the form of one or more steam circuits. The one or more concentrators reflect and concentrate solar energy, comprising light from the sun, onto the one or more receivers. The one or more receivers receive the reflected and concentrated sunlight and capture heat therefrom. The captured heat is then employed to heat the one or more expansion fluid streams in the expansion fluid circuit to provide the one or more heated expansion fluid streams. In Figures 3 to 5, the one or more concentrators and one or more receivers form part of the CSP unit 9.

Parabolic trough CSP systems use trough-shaped mirrors as the concentrators to reflect and concentrate sunlight onto one or more receivers in the form of tubes. An expansion fluid such as steam can be heated in the receiver tubes. For example, solar steam can be generated this way at a pressure of 100 bar and a temperature of about 500°C.

Alternatively, the CSP system can be used to heat a thermal transfer fluid to provide a heated thermal transfer fluid. The heated thermal transfer fluid is then heat exchanged with an expansion fluid to provide a thermal transfer fluid and a heated expansion fluid, the latter being used to power the first turbine. This way, solar steam can be generated at a pressure of 100 bar and a temperature of about 375 °C.

As an alternative to parabolic trough concentrators, a linear Fresnel reflector array of concentrators can be used. This is a line focus system similar to parabolic trough systems in which solar radiation is concentrated on an elevated inverted linear receiver using an array of nearly flat reflectors. The use of linear concentrators provides a lower-cost alternative to parabolic trough concentrators and provides a number of advantages over parabolic systems such as lower structural support and concentrator costs, fixed fluid joints, a receiver separated from the concentrators and long focal lengths allowing the use of conventional glass.

Central receiver (solar tower) CSP systems use a circular array of large individually tracking plain mirrors (heliostats) as the one or more concentrators to concentrate sunlight onto a central receiver mounted on top of a tower. Such systems can provide high conversion efficiencies. If pressurised gas or air is used as the thermal transfer or expansion fluid, temperatures of about 1000 °C or more may be achieved. In a similar manner to the parabolic trough CSP systems, the solar thermal energy can be captured directly in the expansion fluid or used to heat a thermal transfer fluid, which can be subsequently heat exchanged against the expansion fluid to generate the heated expansion fluid to power the first turbine.

Parabolic dish CSP systems are smaller units which use dish shaped concentrators to reflect and concentrate sunlight onto a receiver situated at the focal point of the dish. The concentrated radiation is absorbed by the receiver and can heat a thermal transfer or expansion fluid to temperatures of about 750 °C.

The gas turbine systems and methods of operating a gas turbine system as described above may be employed in a method of cooling a gaseous hydrocarbon stream. Such a method may comprise:
- driving an external compressor using power generated by a gas turbine;
- compressing a medium with the compressor thereby providing a compressed medium;
- extracting heat from the compressed medium, e.g. by heat exchanging the compressed medium against ambient and/or a cooler medium;
- after said extracting of heat from the compressed medium, expanding the compressed medium thereby providing cooling duty;
- cooling the gaseous hydrocarbon stream using at least part of said cooling duty.

A common hydrocarbon stream to be liquefied is natural gas. There are many types of processes that can be used to liquefy natural gas. Many of these processes involve two or more successive refrigerant cycles, often in a cascaded arrangement, for progressively lowering the temperature of the natural gas. Such refrigeration cycles typically comprise refrigerant compressors to recompress the refrigerants in the respective cycles after they have absorbed heat from the natural gas. These refrigerant compressors may be driven as external compressor by a gas turbine system as described herein.

Alternatively (not depicted in a drawing herein), the medium to be compressed by the external compressor is formed by the gaseous hydrocarbon stream itself. By extracting heat from the gaseous hydrocarbon stream after compression, and thereafter expanding the gaseous hydrocarbon stream, the gaseous hydrocarbon stream will undergo cooling by the cooling duty generated. Part of the hydrocarbon stream may even be liquefied this way.

Referring now to Figure 7, there is shown system for cooling a gaseous hydrocarbon stream 10 to produce a liquefied hydrocarbon stream 20. The apparatus comprises a first refrigerant circuit 100 and a second refrigerant circuit 200. The medium to be compressed comprises the refrigerant in the first refrigerant circuit and/or the second refrigerant circuit.

The first refrigerant circuit 100 comprises a system of lines containing a first refrigerant that can be cycled through the circuit. The second refrigerant circuit comprises a separate system of lines, containing a second refrigerant that can be cycled through the second refrigerant circuit 200.

The first refrigerant circuit 100 comprises an external compressor in the form of first compressor 110. A first gas turbine 120 is coupled to the first compressor 110 via an external drive draft in the form of first drive shaft 115, to directly drive the first compressor 110. The first gas turbine 120 is associated with a first inlet air stream 125 as the oxygen-containing stream to the first gas turbine 120. The first compressor 110 is arranged to compress the first refrigerant in line 130. As a precaution, the refrigerant in line 130 may have passed though an optional suction drum 132 to ensure that no liquid constituents are fed into the first compressor 110.

The second refrigerant circuit 200 comprises a second compressor 210 and a second gas turbine 220. The second gas turbine 220 is coupled to the second compressor 210 via a second drive shaft 215, to drive the second compressor 210. The second gas turbine 220 is associated with a second inlet air stream 225 as the oxygen-containing stream to the second gas turbine. The second compressor 210 is arranged to compress the second refrigerant in line 230. As a precaution, the refrigerant in line 230 may have passed though an optional suction drum 232 to ensure that no liquid constituents are fed into the second compressor 210.

The respective first and second gas turbines 120, 220 are each associated with an inlet air cooling heat exchanger, in the form of a first inlet air cooling heat exchanger 127 and a second inlet air cooling heat exchanger 227, respectively. These inlet air cooling heat exchangers are arranged in the first respectively second inlet air stream 125, 225 to cool the first and second inlet air streams. Optionally, filters may be provided in the first and second inlet air streams 125, 225 (not shown) to filter the air before it is compressed in the respective gas turbine 120, 220. Separators (not shown), such as vertical vane type separators, and associated drain facilities may be provided downstream of the inlet air cooling heat exchangers 127, 227 to remove moisture that may develop during the cooling of the inlet air stream(s). Drain facilities may also be provided in the air cooling heat exchangers 127, 227 to drain of moisture from these heat exchangers.

The suction inlet of the second compressor 210 is connected to a second refrigerant outlet 262 of a second heat exchanger 260 via the line 230 and the optional suction drum 232. The second heat exchanger 260 is one or one or more second heat exchangers, arranged to receive and liquefy a cooled hydrocarbon stream in line 80, so as to provide a liquefied hydrocarbon stream 20.

The outlet of the second compressor 210 is connected to line 119 that is provided with one or more ambient coolers 217.

The outlet of the first compressor 110 is connected to one or more first heat exchangers 140a, 140b via a refrigerant line 119. Upstream of the one or more first heat exchangers 140a, 140b, one or more ambient coolers 117 are provided in the refrigerant line 119. Pressure reduction devices 142a, 142b are provided upstream of the one or more first heat exchangers 140a, 140b to regulate the pressure in these heat exchangers. The one or more heat exchangers 140a, 140b have refrigerant outlets that are connected to the first refrigerant compressor 110 via lines 134a and 134b. In the embodiment shown in Figure 1, the lines 134a and 134b connect to the first refrigerant compressor 110 via the optional suction drum 132.

In the embodiment as shown, two of the one or more heat exchangers 140a, 140b are arranged in a parallel configuration, and each have a single warm tube or warm tube bundle 141a, 141b. Alternatively, it is possible to arrange two parallel warm tubes or warm tube bundles in one heat exchanger. This may be in various types of heat exchangers, such as the kettle type as presently shown in Figure 7 and spool-wound type as for instance shown in US Patent 6,370,910.

One of the one or more first heat exchangers is arranged to receive and cool the gaseous hydrocarbon stream 10. This one will be referred to as first hydrocarbon feed heat exchanger 140a. Optionally, there are one or more other first heat exchangers arranged in the hydrocarbon feed line 10 upstream of the first hydrocarbon feed heat exchanger 140a, to be operated at higher pressures than the first hydrocarbon feed heat exchanger 140a.

Line 40 downstream of the first hydrocarbon feed heat exchanger may be connected directly to line 80 that connects to the second heat exchanger 260 in order to provide the cooled hydrocarbon stream to line 80. However, as shown in the embodiment of Figure 7, the line 40 is connected to an optional gas/liquid separator 50, here provided in the form of a scrub column that is provided to receive the hydrocarbon stream 40 at approximately the hydrocarbon feed gas pressure, after it has passed through the first hydrocarbon feed heat exchanger 140a. The optional gas/liquid separator 50 has an overhead outlet for discharging a vaporous overhead stream 60 and a bottom outlet for discharging a liquid bottom stream 70. Line 60 for the vaporous overhead stream 60 may be connected to line 80 to provide the cooled hydrocarbon stream in line 80. A splitter 63 may be provided in line 60 or line 80, to draw off a fuel gas stream 62 from the vaporous overhead stream 60.

The liquid bottom stream 70, which may typically comprise C₂ to C₄ constituents as well as C₅+, may be connected to an optional fractionation train 75 to fractionate at least a part of the bottom stream 70 into fractionation product streams 76.

Another one of the one or more first heat exchangers, which will hereinafter be referenced as first second refrigerant heat exchanger 140b, is arranged to receive the second refrigerant from line 219. To this end, line 219 is connected to the warm tube (or warm tube bundle) 141b. Optionally, there are one or more other first heat exchangers arranged in the second refrigerant line 219 upstream of the first second refrigerant heat exchanger 140b, to be operated at higher pressures than the first second refrigerant heat exchanger 140b. Downstream of the first second refrigerant heat exchanger an optional refrigerant gas/liquid separator 250 is provided to receive the cooled second refrigerant stream 240 after it has passed through the first second refrigerant heat exchanger 140b and separate it into cooled at least by heat exchanging with said first refrigerant from the first refrigerant circuit.

The cooled hydrocarbon stream 80 and the second refrigerant stream 240 (or vapour and liquid second refrigerant streams 252 respectively 254) are connected to the one or more second heat exchangers 260, to further cool and liquefy the cooled hydrocarbon stream 80 to obtain at least an intermediate liquefied hydrocarbon stream 90 and an at least partially or fully evaporated refrigerant stream 265 at the outlet 262.

Line 90 may be connected to depressurizing equipment comprising optional phase separation equipment to separate flash vapour from the remaining liquid. There are various systems known in the art. As example, the depressurizing equipment is here embodied as one or more expansion devices 97 to produce a depressurized stream 98 followed by a phase separator 99. The expansion devices may be embodied in the form of an isentropic expander such as work-expander 95 which may be provided in the form of a turbine, and/or an isenthalpic expander such as a Joule-Thomson valve 96. In the embodiment of Figure 7, the isenthalpic expander 96 is suitably be provided downstream of the isentropic expander 95.

Still referring to Figure 7, the apparatus further comprises a coolant circuit 300, wherein a coolant fluid can be circulated for chilling the first and second inlet air streams 125, 225. In the embodiment as shown, there is provided a storage tank 310 wherein the coolant fluid can be stored. The coolant fluid is preferably a liquid and/or inflammable for safety reasons.

The coolant circuit 300 further comprises a chiller heat exchanger 325 to provide a chilled coolant 320. The chiller heat exchanger 325 is arranged to receive cooling duty 18 and capable of withdrawing heat from the coolant fluid and thereby to provide the chilled coolant in line 320. For instance, it may be arranged to receive the chilling refrigerant from the chilling refrigerant cycle 3 of any one of figures 2 to 4, or it may for instance be integrated into the evaporator of the thermally driven chiller 33 of Figure 5.

To assist the flow of the fluid in the coolant circuit, a pump 305 is provided. The pump may be provided anywhere in the circuit. Suitably, as proposed in the embodiment of Figure 7, the pump 305 has its low pressure inlet connected to the storage tank 310 via line 315 and its high-pressure outlet connected to the chiller 325.

Downstream of the chiller 325 there is provided a divider 335, to divide the chilled coolant 320 over at least a first part 340 and a second part 350. A combiner 338 may be provided downstream of the first and second inlet air cooling heat exchangers 127, 227 in order to form a single return stream 324 of the coolant fluid. The divider as shown in Figure 7 comprises a junction 337, such as a T-piece, a first flow control valve 338 in line 340, and a second flow control valve 339 in line 350. The combiner 338 may be provided in the form of a junction, such as a T-piece.

By dividing the chilled coolant 320 over first and second parts, the cooling duty available in the chilled coolant may be divided essentially in any ratio between the first and second parts, ranging from 0:1 to 1:0.

Both control valves have been depicted as controllable valves, to provide freedom to add other streams. However, the skilled person will understand that in the apparatus as depicted in Figure 7 only one of both flow control valves needs to be controllable because there are only two lines downstream of the junction 337.

The first inlet air cooling heat exchanger 127 is arranged in line 340 to cool the first inlet air stream 125 with the first part of the chilled coolant. The second inlet air cooling heat exchanger 227 is arranged in the second inlet air stream to cool the second inlet air stream with the second part of the chilled coolant.

The system works as follows. The gas turbines 120 and 220 each take in an inlet air stream and a fuel stream and provide mechanical power on the respective drive shafts 115, 215. The drive shafts are mechanically coupled to respective first and second compressors 110, 210 and thus the compressors are driven.

The first refrigerant in the first refrigerant circuit 100 is compressed in compressor 110, cooled against ambient in one or more coolers 117 and distributed over one or more first heat exchangers 140a, 140b. Typically, cooling of the first refrigerant in the cooler(s) 117 causes it to partially, preferably fully, condense. Upstream of each of the first heat exchangers the first refrigerant the pressure is let down in the reduction devices 142a, 142b. The first refrigerant is then allowed to evaporate in the first heat exchangers 140a, 140b by drawing heat from the warm tubes or tube bundles 141a, 141b. The evaporated first refrigerant is led back to the first compressor 110.

A gaseous hydrocarbon stream 10 cooled in one or more of the first heat exchangers, as shown in Figure 7 by passing the gaseous hydrocarbon stream through the warm tube 141a in first hydrocarbon feed heat exchanger 140a, to produce a partially condensed hydrocarbon stream 40.

The second refrigerant in the second refrigerant circuit 200 is compressed in compressor 210, cooled against ambient in one or more coolers 217 and then further cooled in one or more of the first heat exchangers. As depicted in Figure 7, the further cooling of the second refrigerant is achieved by passing it through warm tube 141b in first second refrigerant heat exchanger 140b where it is cooled at least by heat exchanging with said first refrigerant, to produce a partially condensed second refrigerant stream 240.

The partially condensed second refrigerant stream 240 is separated into vapour and liquid second refrigerant phases 252 respectively 254. These stream are then condensed and sub-cooled, respectively subcooled, in the one or more second heat exchangers 260 in a manner well known in the art.

The partially condensed hydrocarbon stream 40 is separated into vaporous overhead stream 60 and liquid bottom stream 70. Optionally, at least a part of the bottom stream 70 is warmed in a bottom stream heat exchanger, in which case at least part of the warmed bottom stream may be fed back to the optional gas/liquid separator 50 as a reboiled stream. The bottom stream 70, or at least the remaining part of it, is typically led to the fractionation train 75 where it is fractionated into one or more fractionation product streams.

The vaporous overhead stream 60 is fed into line 80 as a cooled hydrocarbon stream 80. The cooled hydrocarbon stream 80 is then fed to one or more of the second heat exchangers 260 in a manner known in the art where it is liquefied using the second refrigerant. Herewith is produced an intermediate liquefied hydrocarbon stream 90.

This intermediate liquefied hydrocarbon stream 90 may be depressurized in the one or more expansion devices 97 and the depressurized stream 98 led to phase separator 99, where any vaporous constituents, mainly flash vapour, are separated from the liquid hydrocarbons in stream 98. The liquid hydrocarbons are removed from the phase separator 99 as liquefied hydrocarbon product stream 20, the vaporous constituents are drawn from the phase separator 99 as end flash stream 92.

The coolant fluid in the storage tank 310 is pumped or otherwise led to chiller 325, wherein it is actively chilled to provide chilled coolant 320 by heat exchanging against cold fluid 327. The cooling duty available in the chilled coolant 320 is divided over at least first and second parts. The cooling duty may for instance be divided by physically splitting the chilled coolant 320 over two or more part streams, such as two part streams 340, 350 in the embodiment of Figure 7. The first part stream 340 is used to cool the first inlet air stream 125 and the second part stream 350 is used to cool the second inlet air stream 225.

After having cooled the first and/or second inlet air streams 125, 225, the coolant may be recombined and led to the storage tank 310 for re-use.

The inlet air streams 125, 225 are preferably not cooled to lower than about 5 °C to ensure that formation of ice is avoided.

The cooling duty for actively chilling of the coolant fluid in the one or more chillers 325 may be obtained as described above with reference to Figures 1 to 5.

In alternative embodiments, the second refrigerant may be fully condensed after its cooling against the first refrigerant. In such embodiments, obviously the optional refrigerant gas/liquid separator 250 need not be provided. There are also alternative embodiments wherein the second refrigerant is not fully condensed but wherein nevertheless no gas/liquid phase separation is needed, for instance because full condensation is achieved in a subsequent heat exchanging against a further refrigerant or by auto-cooling.

The apparatus may have various modifications compared to what is specifically depicted in Figure 7. Some modifications and alternatives have already been mentioned hereinabove. In another optional modification, for instance, first compressor 110 may have a multiple of inlets at different pressure levels in a manner known in the art. The first compressor 110 and/or the second compressor 210 may each be embodied in the form of two or more successive or parallel arranged frames, in a manner known in the art.

Optionally, (not shown), an overhead heat exchanger may be provided in line 60 in a way known in the art. Such an overhead heat exchanger may form part of the one or more first heat exchangers, and it may for instance be connected to line 119 to obtain a fraction of the first refrigerant. Where such an overhead heat exchanger is provided in line 60, an optional overhead gas/liquid separator is provided downstream of the overhead heat exchanger in order to remove any condensed fraction from stream downstream of the overhead heat exchanger. The vapour outlet of the overhead gas/liquid separator may then be connected to line 80 to provide the cooled hydrocarbon stream. The bottom liquid outlet of the overhead gas/liquid separator may be connected to the gas/liquid separator 50 to feed back at least a portion of the condensed fraction as a reflux stream. The fuel gas stream 62 may be drawn from the vapour stream.

In an alternative embodiment, the optional gas/liquid separator 50 is located upstream of the first hydrocarbon feed heat exchanger 140a. The overhead outlet of the gas/liquid separator could in such an alternative embodiment be connected to line 10 in Figure 7, and line 40 could the be connected directly to line 80 to provide the cooled hydrocarbon stream to the second heat exchanger 260. Such embodiments may have an expander upstream of the optional gas/liquid separator 50, and typically one or more recompressors and/or booster compressors upstream of the first hydrocarbon feed heat exchanger 140a, and/or other heat exchangers to pre-cool the feed to the optional gas/liquid separator 50. Such embodiments are known in the art and need not be further detailed here.

In the embodiment as shown in Figure 7, the first refrigerant is a single component refrigerant consisting essentially of propane, while the second refrigerant is a mixed refrigerant. A mixed refrigerant or a mixed refrigerant stream as referred to herein comprises at least 5 mol% of two different components. The mixed refrigerant may contain two or more components selected from the group consisting of: nitrogen, methane, ethane, ethylene, propane, propylene, butanes. A common composition for a mixed refrigerant can be:

| | |
|---|---|
| Nitrogen | 0-10 mol% |
| Methane (C1) | 30-70 mol% |
| Ethane (C2) | 30-70 mol% |
| Propane (C3) | 0-30 mol% |
| Butanes (C4) | 0-15 mol% |

The total composition comprises 100 mol%.

However, the methods and apparatus disclosed herein may further involve the use of one or more other refrigerants, in separate or overlapping refrigerant circuits or other cooling circuits. Moreover, the first refrigerant may be a mixed refrigerant (such as described for instance in US Pat. 6,370,910) and/or the second refrigerant may be a single component refrigerant (such as consisting essentially of ethane, ethylene, methane or nitrogen). In particular when a mixed refrigerant is selected instead of a single component refrigerant, the type of heat exchanger may be selected differently from the kettle types heat exchangers that have been depicted in Figure 7, for instance tube-in-shell type heat exchangers such as coil wound heat exchangers.

The gaseous hydrocarbon stream 10 to be cooled and liquefied may be derived from any suitable gas stream to be cooled and liquefied, such as a natural gas stream obtained from natural gas or petroleum reservoirs or coal beds. As an alternative the gaseous hydrocarbon stream 10 may also be obtained from another source, including as an example a synthetic source such as a Fischer-Tropsch process.

When the gaseous hydrocarbon stream 10 is a natural gas stream, it is usually comprised substantially of methane. Preferably the gaseous hydrocarbon stream 10 comprises at least 50 mol% methane, more preferably at least 80 mol% methane.

Depending on the source, natural gas may contain varying amounts of hydrocarbons heavier than methane such as in particular ethane, propane and the butanes, and possibly lesser amounts of pentanes and aromatic hydrocarbons. The composition varies depending upon the type and location of the gas.

Conventionally, the hydrocarbons heavier than methane are removed as far as needed to produce a liquefied hydrocarbon product stream in accordance with a desired specification. Hydrocarbons heavier than butanes (C₄) are removed as far as efficiently possible from the natural gas prior to any significant cooling for several reasons, such as having different freezing or liquefaction temperatures that may cause them to block parts of a methane liquefaction plant.

The natural gas may also contain non-hydrocarbons such as H₂O N₂, CO₂ Hg, H₂S and other sulphur compounds, and the like. Thus, if desired, the gaseous hydrocarbon stream 10 comprising the natural gas may be pre-treated before cooling and at least partial liquefaction. This pre-treatment may comprise reduction and/or removal of undesired components such as CO₂ and H₂S or other steps such as early cooling, pre-pressurizing or the like. As these steps are well known to the person skilled in the art, their mechanisms are not further discussed here.

The system and method for cooling the hydrocarbon stream described hereinabove is not limited to two refrigeration circuits: it can also be applied for dividing cooling duty of the chilled coolant over three or more parts for cooling third or more inlet air streams of other refrigerant circuits.

Some gas turbines, for example type LMS100 ™ by General Electric as published in the GE Energy publication GER-422A (06/04) titled "New High Efficiency Simple Cycle Gas Turbine - GE's LMS100™", have an intercooler between low and high pressure compression stages used to compress an air stream which is passed to the combustion chamber. The presently proposed methods and apparatus are also envisaged to form part of such intercooling stage and to cover solar-powered chilling of such intercooling of the oxydizing stream. The intercooling stage thus comprises a solar powered chilling step to bring a low pressure compressed oxygen-containing stream in the intercooling stage to an intercooling temperature that is lower than ambient temperature.

In more detail, and with reference to Figure 8, the method may comprise selecting a gas turbine 5 having a low pressure compression stage 150 usually comprising a low pressure compressor 150; a high pressure compression stage 160 usually comprising a high pressure compressor 160; a combustion chamber 7, and an expansion stage 8 usually comprising an expansion turbine 8. Prior to said chilling, the oxygen-containing stream 45 is:
- taken in with the gas turbine 5 from a source which is at an ambient temperature;
- passed to the low pressure compression stage 150 of the gas turbine 5;
- compressed in the low pressure compression stage 150, to provide a low pressure compressed oxygen-containing stream 55.

This low pressure compressed oxygen-containing stream 55 is then chilled as described hereinabove, while it is passed through the intercooling stage 120 to the high pressure compression stage 160. After said chilling, the temperature (hereinafter referred to as the intercooling temperature) is lower than the ambient temperature. The chilled low pressure compressed oxydizing stream 56 coming from the intercooling stage 120, is then compressed in the high pressure compression stage 160 to provide a high pressure oxydizing stream 65, which is then passed to the combustion chamber 7.

A gas turbine system employing solar powered intercooling chilling as described above is shown in Figure 8. The system comprises gas turbine 5 with an oxydizing stream compressor comprising low pressure compressor 150 and a high pressure compressor 160. Commercially available gas turbines having two compression stages in the form of a low pressure compressor and a high pressure compressor are found amongst the group of a aeroderivative gas turbines.

A first air inlet 51 into the gas turbine 5 is arranged to take in a oxygen-containing stream in the form of air inlet stream 45 from an air source at an ambient temperature. The low pressure compression stage 150 connects the first air inlet 51 with a low pressure compressed air stream outlet 52 from the gas turbine 5. The intercooling stage 120 is arranged to receive the low pressure compressed air stream 55 passing through the low pressure compressed air stream outlet 52. The intercooling stage 120 is provided with an ambient cooler 30 and heat exchanger 4. The latter is arranged to chill the ambient-cooled oxygen-containing stream 35 using chilling duty generated from solar power in accordance with one or more of the methods and systems described hereinabove. The temperature of the chilled oxydizing stream in the form of intercooled air stream 56 is at least 5 °C below the ambient temperature of the air source.

The gas turbine 5 further has a second air inlet 61 into the gas turbine 5 for taking in the intercooled air stream 56 from the intercooling stage 120. The combustion chamber is connected to the second air inlet 61 via the high pressure compressor 160 on one end and to the expansion turbine 8 on the other end. Fuel stream inlet 71 is provided into the gas turbine 5 for allowing the fuel stream 69 into the combustion chamber 7. Finally, the gas turbine system comprises a first mechanical drive shaft 24 connecting the expansion turbine 8 with the high pressure compressor 160, and a second mechanical drive shaft 22 connecting the low pressure compressor 150 with the high pressure compressor 160.

The terms low and high pressure compression stages are intended to encompass compressors housed in a single casing, or those in which multiple compressors are arranged in series on a common mechanical drive shaft or shafts, to sequentially compress the air inlet stream 45.

The external drive shaft 26 of the gas turbine system as illustrated in Figure 8 may drive an external compressor, such as compressors 110, 210 as illustrated in Figure 7, or perform other duty.

A person skilled in the art will readily understand that the present invention may be modified in many ways without departing from the scope of the appended claims.

## Claims

1. Method of operating a gas turbine, comprising:
- feeding a fuel stream to a gas turbine;
- chilling an oxygen-containing stream to provide a chilled oxydizing stream;
- feeding the chilled oxydizing stream to the gas turbine;
- combusting the fuel stream in the gas turbine with the chilled oxydizing stream;
- converting solar power into chilling duty;
- applying at least part of the chilling duty for said chilling of said oxygen-containing stream.

2. The method of claim 1, wherein said converting solar power into chilling duty comprises driving a chilling cycle compressor with the solar power to compress a chilling refrigerant.

3. The method of claim 2, wherein said solar power is converted to electric power and the chilling cycle compressor is driven by an electric motor powered by said electric power.

4. The method of claim 2, wherein heat obtained from said solar power is used to produce a heated expansion fluid stream, and wherein the chilling cycle compressor is driven by the heated expansion fluid stream.

5. The method of claim 1, wherein said converting solar power into chilling duty comprises adding heat obtained from solar power to a thermally driven chiller.

6. The method of claim 5, further comprising capturing solar energy from the sun and heating a heat transfer fluid using the captured solar energy, and passing the heat transfer fluid to the thermally driven chiller.

7. A method of cooling a gaseous hydrocarbon stream, comprising:
- driving an external compressor using power generated by a gas turbine;
- compressing a medium with the external compressor thereby providing a compressed medium;
- extracting heat from the compressed medium;
- after said extracting of heat from the compressed medium, expanding the compressed medium thereby providing cooling duty;
- cooling the gaseous hydrocarbon stream using at least part of said cooling duty,
wherein operating the gas turbine in accordance with the method of any one of claims 1 to 7.

8. The method according to claim 7, wherein said cooling the gaseous hydrocarbon stream using said at least part of said cooling duty comprises:
- indirectly heat exchanging the gaseous stream against at least part of the first medium that has been expanded.

9. The method according to claim 7 or 8, wherein during or after said cooling the gaseous hydrocarbon stream is at least partly condensed to form a liquefied hydrocarbon stream.

10. A gas turbine system, comprising:
- a gas turbine comprising a combustion chamber;
- a fuel feed system for supplying a fuel to the combustion chamber;
- an oxygen supply system for supplying oxygen-containing stream to the combustion chamber, the oxygen supply system comprising a chilling unit for chilling the oxygen-containing stream upstream of the combustion chamber;
- a solar power convertor arranged to convert solar power into chilling duty and to provide said chilling duty to the chilling unit.

11. The gas turbine system of claim 10, wherein said solar power convertor comprises a chilling cycle compressor and a chilling refrigerant, wherein the chilling cycle compressor is powered using electrical power and/or mechanical power generated by conversion of the solar power, and wherein the chilling refrigerant is coupled to the chilling cycle compressor to be compressed by the chilling cycle compressor.

12. The gas turbine system of claim 10, wherein said chilling unit comprises a thermally driven chiller arranged to receive heat obtained from solar power.

13. A system for cooling a gaseous hydrocarbon stream, comprising:
- an external compressor functionally coupled to a gas turbine to be driven with power generated by the gas turbine;
- a medium communicating with the external compressor to be compressed in the compressor to provide a compressed medium;
- a cooler arranged downstream of the external compressor to extract heat from the compressed medium;
- an expander arranged downstream of the cooler to expand the compressed medium thereby providing cooling duty;
- means for extracting heat from the gaseous hydrocarbon stream using at least part of said cooling duty,
wherein the gas turbine is comprised in a gas turbine system according to any one of claims 10 to 12.

14. The system according to claim 13, further comprising a heat exchanger arranged downstream of said expander to receive the gaseous hydrocarbon stream and at least part of the first medium that has been expanded in said expander.
